# EUROPÄISCHE PATENTSCHRIFT

(11) **EP 1 148 317 B1**
(45) Veröffentlichungstag und Bekanntmachung des Hinweises auf die Patenterteilung: **10.11.2004**
(21) Anmeldenummer: 01108811.9
(22) Anmeldetag: 07.04.2001
(51) Int. Cl.: G01F 15/00, G01F 15/18

(54) **Vorrichtung zum dichten Ein- und Herausführen eines Messwertgebers in ein bzw. aus einem Fluid in einem Rohr**
Device for sealingly introducing/extracting a transducer in/from a fluid in a pipe
Dispositif pour introduire et sortir de manière étanche un transducteur dans un fluid dans une canalisation

(30) Priorität: 22.04.2000 DE 10019991
(43) Veröffentlichungstag der Anmeldung: 24.10.2001
(73) Patentinhaber: Postberg, Hans Jürgen, 63486 Bruchköbel (DE)
(72) Erfinder: Postberg, Hans Jürgen, 63486 Bruchköbel (DE)
(74) Vertreter: LENZING GERBER

(56) Entgegenhaltungen:
- WO-A-92/01218
- US-A- 4 152 936
- US-A- 4 645 242

## Beschreibung

Die Erfindung bezieht sich auf eine Vorrichtung zum dichten Ein- und Herausführen eines Meßwertgebers in ein bzw. aus einem Fluid in einem Rohr, mit einer Buchse, die einen ersten Endabschnitt aufweist, der abgedichtet in eine Bohrung des Rohrs bis in das Fluid im Rohr einführbar und mit einem ersten Anschlag zur Einführungsbegrenzung versehen ist.

Eine Vorrichtung dieser Art ist aus dem deutschen Gebrauchsmuster 295 05 320.8 bekannt. Bei dieser Vorrichtung ist die Bohrung in einem Rohrstück ausgebildet, das koaxial zwischen zwei angrenzenden Abschnitten des Rohres eingebaut ist. Das Rohrstück bildet zugleich das Gehäuse eines Absperrventils in Form eines Kugelventils, das der Absperrung und Freigabe des Durchflusses des Fluids durch das Rohr und der Ausbildung eines abgeschlossenen Hohlraums im Sperrzustand dient. Um den Meßwertgeber auszuwechseln oder zu warten, muß die Buchse zusammen mit dem Meßwertgeber aus dem Rohrstück ausgebaut werden. Hierbei kann auch im Sperrzustand des Kugelventils das im Hohlraum der Hohlkugel des Kugelventils vorhandene Fluid durch die Bohrung austreten. Dies ist unerwünscht, insbesondere bei umweltschädlichen Fluiden.

Der Erfindung liegt die Aufgabe zugrunde, eine Vorrichtung der eingangs genannten Art anzugeben, die es ermöglicht, den Meßwertgeber auszuwechseln, ohne daß das durch das Rohr geleitete Fluid austritt, aber stets eine definierte und reproduzierbare Einbaulage gewährleistet.

Erfindungsgemäß ist diese Aufgabe dadurch gelöst, daß daß in der Buchse eine Hülse axial über einen begrenzten Verstellweg verschiebbar gelagert ist, daß die Buchse einen zweiten mit Außengewinde versehenen Endabschnitt aufweist, der mit dem Innengewinde einer Mutter zusammenwirkt, daß die Mutter mit einem aus dem zweiten Endabschnitt der Buchse abgedichtet herausragenden ersten Endabschnitt der Hülse in Mitnahmeverbindung steht, daß ein zweiter Endabschnitt der Hülse, wenn sich die Hülse am einen Ende ihres Verstellwegs befindet, aus dem ersten Endabschnitt der Buchse herausragt und, wenn sich die Hülse am anderen Ende ihres Verstellwegs befindet, innerhalb der Buchse liegt, daß der zweite Endabschnitt der Hülse mit radial fluchtenden Öffnungen für einen weitgehend ungehinderten Durchgang des Fluids versehen und an seinem freien Ende geschlossen ist, daß der zweite Endabschnitt der Hülse, wenn sich die Hülse am anderen Ende ihres Verstellwegs befindet, zwischen dem freien Ende des zweiten Endabschnitts der Hülse und den Öffnungen gegen die Buchse abgedichtet ist und daß der Meßwertgeber einen zylindrischen Körper mit einem Meßkopf an einem Ende aufweist und in die Hülse axial und gegen die Hülse abgedichtet bis in eine Endlage relativ zur Hülse einführbar ist, in der der Meßkopf in Höhe der Öffnungen liegt und in der der Meßwertgeber in Mitnahmeverbindung mit der Hülse bringbar ist.

Bei dieser Ausbildung wird die Buchse in die Bohrung eingeführt, während die Hülse innerhalb der Buchse eine zurückgezogene Lage einnimmt, in der die Öffnungen in der Hülse durch die Buchse abgedeckt und geschlossen sind. Danach oder vorher wird der Meßwertgeber in die Hülse so weit eingeführt, bis sein Meßkopf in Höhe der Öffnungen der Hülse liegt. Anschließend wird die Mutter in eine Richtung gedreht, in der sie die Hülse aus der Buchse herausschiebt, bis die Öffnungen der Hülse am einen Ende ihres Verstellwegs innerhalb des Rohres oder Rohrstücks liegen. Gleichzeitig wird der Meßwertgeber ebenfalls vorgeschoben, bis sein Meßkopf in Höhe der Öffnungen der Hülse liegt. Um den Meßwertgeber auszuwechseln oder zu warten, wird die Mutter in entgegengesetzter Richtung unter Mitnahme der Hülse bis zum anderen Ende des Verstellwegs gedreht, in der die Öffnungen der Hülse durch die Buchse überdeckt und abgedichtet sind. In dieser Lage der Hülse kann dann der Meßwertgeber aus der Hülse entfernt werden, ohne daß das Fluid aus dem Rohr oder Rohrstück austreten kann. Ein anderer Meßwertgeber oder der gewartete Meßwertgeber kann dann wieder in dieser anderen Endlage in die Hülse eingeführt werden. Anschließend kann die Hülse wiederum durch Drehung der Mutter in das Rohr oder Rohrstück vorgeschoben werden, bis ihre Öffnungen innerhalb des Rohres oder Rohrstücks liegen. Gleichzeitig wird dann der Meßwertgeber vorgeschoben, so daß sein Meßkopf mit den Öffnungen in der Hülse fluchtet.

Vorzugsweise ist dafür gesorgt, daß innerhalb der Mutter ein Bolzen angeordnet ist, der mit seinem einen Ende mit der Hülse in Mitnahmeverbindung steht, mit seinem mittleren Abschnitt in einer axialen Nut eines am zweiten Endabschnitt der Buchse ausgebildeten zweiten Anschlags, der das Außengewinde des zweiten Endabschnitts der Buchse aufweist, verschiebbar gelagert ist, und daß der Verstellweg der Hülse durch den zweiten Anschlag begrenzt ist. Dieser Bolzen und die Art seiner Lagerung sowie der zweite Anschlag ergeben einen einfachen Aufbau der Vorrichtung, um zum einen eine definierte relative Drehwinkellage von Buchse und Hülse sicherzustellen und zum anderen den Verstellweg der Hülse in beiden Richtungen zu begrenzen.

Hierbei ist es günstig, wenn der Bolzen an seinem anderen Ende mit einem Kopf versehen ist, der zwischen den beiden Anschlägen liegt und dessen Durchmesser größer als die Weite der Nut ist. Der Bolzen bewirkt hierbei gleichzeitig die Begrenzung des Verstellwegs der Hülse in der einen Richtung durch Anlage am zweiten Anschlag.

Eine einfache Ausbildung der Mitnahmeverbindung von Mutter und Hülse kann darin bestehen, daß die Mitnahmeverbindung zwei die Hülse unverschiebbar umgebende Ringe aufweist, zwischen denen ein radial nach innen ragender, mit der Mutter verbundener Vorsprung eingreift.

Hierbei kann der Bolzen an seinem einen Ende einen zweiten Kopf aufweisen, der zwischen dem auf seiten der Buchse liegenden Ring und dem als Flansch ausgebildeten Vorsprung der Mutter eingreift. Die Mutter bildet hierbei eine Überwurfmutter, die mit ihrem Flansch gleichzeitig den zweiten Kopf des Bolzens arretiert.

Der mittlere Abschnitt des Bolzens kann dann in einer axialen Nut des auf seiten der Buchse liegenden Rings liegen. Dadurch ergibt sich auf einfache Weise eine axiale Führung des Bolzens.

Sodann kann dafür gesorgt sein, daß der Körper des Meßwertgebers mit einem Flansch versehen ist, der in der Endlage der Einführung des Meßwertgebers in die Hülse durch eine Schraubverbindung am freien Ende des ersten Endabschnitts der Hülse anliegend gehalten ist.

Eine einfache Ausgestaltung kann darin bestehen, daß die Schraubverbindung durch eine den Flansch des Meßwertgeber-Körpers übergreifende und auf den ersten Endabschnitt der Hülse geschraubte Überwurfmutter bewirkt ist. Diese Überwurfmutter bewirkt eine formschlüssige Verbindung zwischen der Hülse und dem Meßwertgeber, so daß er bei der Verstellung der Hülse in der einen oder anderen Richtung mitgenommen wird.

Sodann ist vorteilhaft, wenn der erste Endabschnitt der Buchse mit einem Außengewinde versehen und die Bohrung eine Gewindebohrung ist, in die das Außengewinde einschraubbar ist. Dies ermöglicht ein einfaches Auswechseln der Vorrichtung.

Der erste Anschlag kann ein am Umfang mehrkantiger Bund sein. Dies erleichtert das Einschrauben der Buchse in die Gewindebohrung des Rohres oder Rohrstücks unter Zuhilfenahme eines Maulschlüssels, der auf den Anschlagbund aufgesetzt wird.

Eine vorteilhafte Weiterbildung der Vorrichtung kann darin bestehen, daß sie ein Rohrstück aufweist, in der die Gewindebohrung ausgebildet ist und das koaxial zwischen zwei Abschnitten des Rohres eingebaut wird und einen vorbestimmten Durchtrittsquerschnitt aufweist. Dieses Rohrstück ermöglicht eine genaue Messung des Durchflusses durch das Rohr im Bereich des Rohrstücks, unabhängig von dem Innendurchmesser der angrenzenden Abschnitte des Rohres, wobei der Meßwertgeber die Strömungsgeschwindigkeit messen kann und aus dieser und dem vorbestimmten Durchtrittsquerschnitt des Rohrstücks ein Meßsignal erzeugt, das ein Maß für den Durchfluß darstellt.

Alternativ kann dafür gesorgt sein, daß das Rohrstück das Gehäuse eines der Absperrung und Freigabe des Durchflusses des Fluids durch das Rohr und der Ausbildung eines abgeschlossenen Hohlraums im Sperrzustand dienenden Kugelventils bildet, dessen Hohlkugel im Sperrzustand zusammen mit dem Rohrstück den Hohlraum begrenzt und zur Gewindebohrung hin und quer dazu offen ist. Bei dieser Anwendung kann weiterhin im gesperrten oder geöffneten Zustand des Sperrventils gemessen oder der Meßwertgeber ausgewechselt werden. Wenn das Sperrventil in seinem Gehäuse, wie bisher, weitere Gewindebohrungen für den Anschluß anderer Meßwertgeber aufweist, kann nach dem Ausbau dieser weiteren Meßwertgeber bei geschlossenem Ventil der zuerst genannte Meßwertgeber geprüft und durch Einleitung einer Spülflüssigkeit durch die weiteren Gewindebohrungen hindurch der erste Meßwertgeber gereinigt werden, während das Sperrventil den geschlossenen Zustand einnimmt, ohne daß die Reinigungsflüssigkeit in das normalerweise durch das Rohr strömende Fluid gelangt.

Eine weitere alternative Weiterbildung der erfindungsgemäßen Vorrichtung besteht vorzugsweise darin, daß die eine von zwei übereinanderliegend verbundenen Platten, die je eine zur anderen koaxiale Durchgangsöffnung aufweisen, am Umfang des Rohres dicht anliegend so befestigt ist, daß zwischen den Platten eine Scheibe um eine zu den Durchgangsöffnungen exzentrische Achse in eine die Durchgangsöffnungen sperrende Lage drehbar und gegen die Platten abgedichtet gelagert ist, daß die Scheibe mit den Durchgangsöffnungen zur Deckung bringbar ist, und daß koaxial zur Durchgangsöffnung der dem Rohr abgekehrten anderen Platte ein die Gewindebohrung aufweisender Stutzen angeformt ist, in den der erste Endabschnitt der Buchse mit seinem Außengewinde abgedichtet einschraubbar ist. Bei dieser Ausbildung ist es möglich, in einer Drehwinkelstellung der Scheibe, in der ihr Loch mit den Durchgangsöffnungen der Platten fluchtet, ein Bohrwerkzeug in den Stutzen abgedichtet einzuschrauben, so daß der Bohrer mit Spiel in den Stutzen ragt, und durch Vorschieben und Drehen des Bohrers ein Loch in das Rohr zu Bohren, während weiterhin das Fluid durch das Rohr strömt. Das Bohren des Loches erfordert mithin keine Unterbrechung des Fluidstroms im Rohr und keine Betriebsunterbrechung einer mit dem Fluid durch das Rohr hindurch versorgten Anlage, z.B. einer mit Wasser oder Luft gekühlten Anlage. Nach dem Bohren des Loches wird der Bohrer nur so weit innerhalb des Stutzens zurückgezogen, bis er außerhalb der Durchgangsöffnungen der Platten liegt, während das Bohrwerkzeug weiterhin den Stutzen dicht verschließt. Danach wird die Scheibe in eine Drehwinkellage gedreht, in der ihr Loch radial außerhalb der Durchgangsöffnungen liegt und die Scheibe die Durchgangsöffnungeh verschließt. In dieser Schließlage der Scheibe kann das Bohrwerkzeug aus dem Stutzen geschraubt und statt dessen die Buchse abgedichtet in den Stutzen eingeschraubt werden. Danach wird die Scheibe wieder in die Öffnungslage gedreht, in der ihr Loch mit den Durchgangsöffnungen und dem in das Rohr gebohrten Loch fluchtet. In dieser Öffnungslage kann die Hülse zusammen mit dem Meßwertgeber mittels der Mutter durch die Durchgangsöffnungen und Löcher hindurch bis in das Rohr eingeführt werden, ohne die Fluidströmung im Rohr zu unterbrechen. Wenn der Meßwertgeber ausgewechselt oder gewartet werden soll, kann er, wie bisher nach dem zurückziehen der Hülse in die Buchse, aus der Hülse entfernt und umgekehrt wieder in diese eingeführt werden, ohne den Fluidstrom zu unterbrechen. Alternativ kann auch die Buchse mitsamt Meßwertgeber ausgewechselt werden, nachdem sie so weit in den Stutzen zurückgeschraubt wurde, daß die Scheibe in ihre Schließlage gedreht werden kann. Auch hierbei braucht der Fluidstrom im Rohr nicht unterbrochen zu werden, da das Fluid in der Schließlage der Scheibe weiterhin nicht durch das Loch des Rohres und durch die Durchgangsöffnungen der Platten austreten kann.

Vorzugsweise ist dafür gesorgt, daß die am Rohr anliegende Platte in ihrer dem Rohr zugekehrten Seite eine teilzylindrische Aussparung mit einem dem Krümmungsradius des Rohrumfangs angepaßten Krümmungsradius aufweist und zwei Ränder dieser Platte durch ein spannbares Metallband, das an der den Platten abgekehrten Seite des Rohres anliegt, verbunden sind. Dies ergibt eine einfache Art der Befestigung der Platten mit der Scheibe am Rohr.

Die Erfindung und ihre Weiterbildungen werden nachstehend anhand der beigefügten Zeichnungen bevorzugter Ausführungsbeispiele näher beschrieben. Es zeigen:
- Fig. 1: einen Axialschnitt durch ein Ausführungsbeispiel einer erfindungsgemäßen Vorrichtung zum dichten Ein- und Herausführen eines Meßwertgebers in ein bzw. aus einem Fluid in einem Rohr oder Rohrstück mit eingesetztem Meßwertgeber in dessen Betriebslage,
- Fig. 2: einen Axialschnitt der Vorrichtung nach Fig. 1 in einer um 90° um ihre Längsachse gedrehten Lage,
- Fig. 3: die Vorrichtung nach Fig. 1 in der gleichen Drehwinkellage, in der sie in Fig. 2 dargestellt ist, jedoch in einer zurückgezogenen Lage des Meßwertgebers, in der er nicht in das Rohr oder Rohrstück ragt und gegenüber einem durch das Rohr oder Rohrstück strömenden Fluid abgedichtet ist, so daß er aus der Vorrichtung entfernt werden kann, ohne daß das Fluid austritt, Vorrichtung entfernt werden kann, ohne daß das Fluid austritt,
- Fig. 4: eine perspektivische Ansicht der Vorrichtung nach Fig. 1 in der Betriebslage des Meßwertgebers,
- Fig. 5: eine perspektivische Explosionsdarstellung einer Anordnung, bei der die Vorrichtung nach Fig. 1 in einem Rohrstück eingesetzt wird, das zwischen zwei Abschnitten eines längeren Rohres dicht befestigt wird,
- Fig. 6: eine Schnittansicht der zusammengebauten Anordnung nach Fig. 5 in vergrößertem Maßstab, bei der die Vorrichtung nach Fig. 1 in das Rohrstück nach Fig. 5 eingesetzt ist, und sich der Meßwertgeber in der Betriebslage befindet,
- Fig. 7: die Vorrichtung nach Fig. 1 in Kombination mit einem das Gehäuse eines Absperrventils bildenden Rohrstück, das koaxial in zwei Abschnitte eines Rohres eingebaut wird, wobei sich der Meßwertgeber in der Betriebslage befindet,
- Fig. 8: eine um 90° gegenüber Fig. 7 gedrehte Ansicht der Anordnung nach Fig. 7, wobei der Meßwertgeber die zurückgezogene Lage nach Fig. 3 einnimmt,
- Fig. 9: einen Schnitt eines Teils der Vorrichtung nach Fig. 1 in Kombination mit einer Einrichtung zum abgedichteten Anschließen und Auswechseln der Vorrichtung, einschließlich des Meßwertgebers in der Betriebslage und
- Fig. 10: eine weitere Ansicht der Anordnung nach Fig. 9 in einer gegenüber dieser um 90° gedrehten Lage.

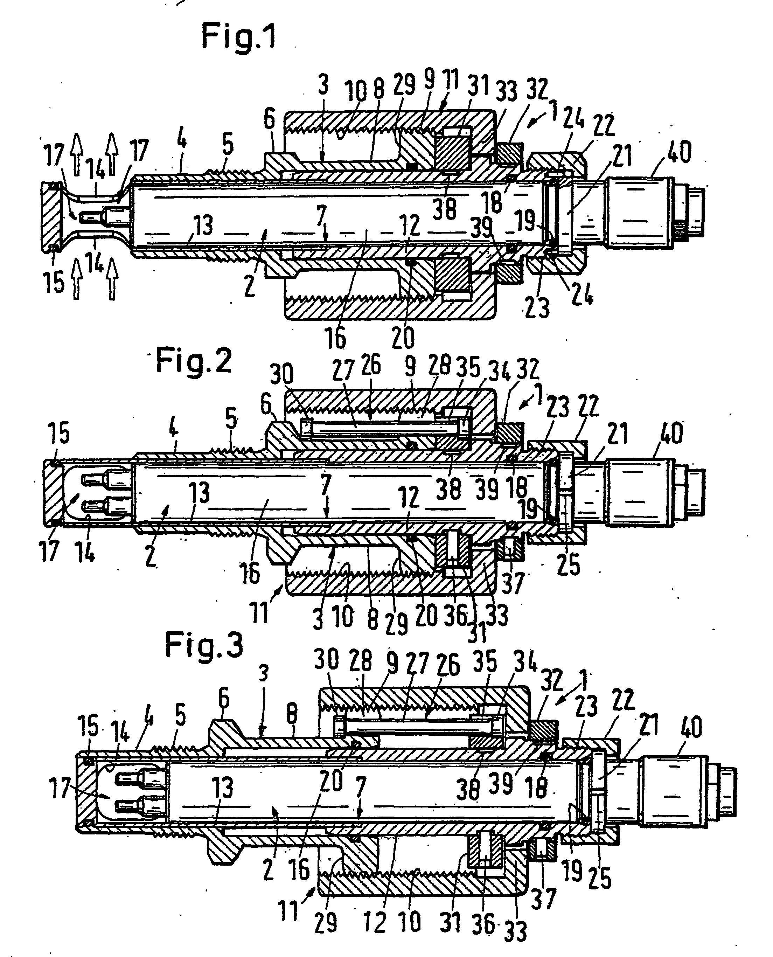

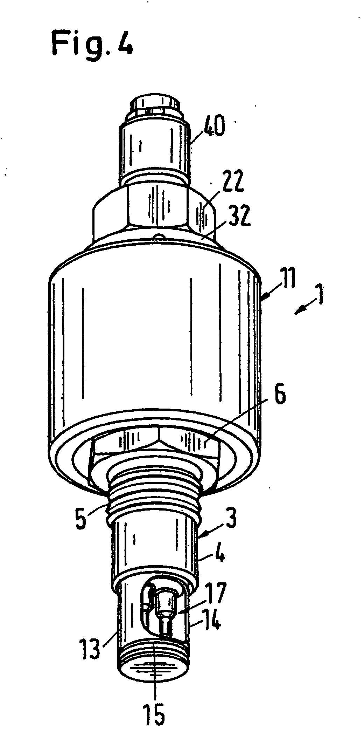

Nachstehend wird zunächst die Vorrichtung 1 nach den Fig. 1 bis 4 näher beschrieben. Die Vorrichtung 1 dient allein oder zusammen mit einem weiteren Teil oder einer weiteren Einrichtung zum dichten Ein- und Herausführen eines Meßwertgebers 2 in ein bzw. aus einem Fluid in einem in den Fig. 1 bis 4 nicht dargestellten Rohr oder Rohrstück. Die Einführung erfolgt zur Durchflußmessung bis in eine vorbestimmte Tiefe (Axiallage) und in einer Drehwinkellage, wie es insbesondere für einen Durchfluß-Meßwertgeber erforderlich ist, der nach dem kalorimetrischen Meßprinzip, wie der dargestellte, arbeitet.

Die Vorrichtung 1 enthält eine Buchse 3. Die Buchse 3 hat einen ersten Endabschnitt 4 mit einem Außengewinde 5. Der Endabschnitt 4 ist mittels des Gewindes 5 in eine in den Fig. 1 bis 4 nicht dargestellte Gewindebohrung eines Rohrstücks zwischen Abschnitten eines Rohres oder in eine am Rohr befestige Anschlußeinheit abgedichtet bis in das Fluid einschraubbar. Auf das Rohrstück und die Anschlußeinheit wird anhand der weiteren Figuren noch näher eingegangen. Die Buchse 3 ist mit einem ersten als Bund ausgebildeten Anschlag 6 zur Einschraubbegrenzung versehen, der außen mit einem Mehrkant zum Aufsetzen eines Maulschlüssels versehen ist. Innerhalb der Buchse 3 ist eine Hülse 7 axial über einen begrenzten Verstellweg verschiebbar gelagert. Ein zweiter Endabschnitt 8 der Buchse 3 ist ebenfalls mit einem Außengewinde 9 versehen, das mit dem Innengewinde 10 einer Mutter 11, hier einer Überwurfmutter, zusammenwirkt. Die Mutter 11 steht mit einem aus dem zweiten Endabschnitt 8 der Buchse 3 abgedichtet herausragenden ersten Endabschnitt 12 der Hülse 7 in Mitnahmeverbindung. Ein zweiter Endabschnitt 13 der Hülse 7 ragt an einem Ende ihres Verstellwegs aus dem ersten Endabschnitt 4 der Buchse 3 heraus, wie es in den Fig. 1 und 2 dargestellt ist, und liegt am anderen Ende ihres Verstellwegs innerhalb der Buchse 3, wie es in Fig. 3 dargestellt ist. Der zweite Endabschnitt 13 der Hülse 7 ist mit radial fluchtenden Öffnungen 14 für den weitgehend ungehinderten Durchgang des Fluids versehen, dessen Strömungsrichtung in Fig. 1 durch Pfeile dargestellt ist, und am freien Ende geschlossen. Der zweite Endabschnitt 13 der Hülse 7 ist am anderen Ende ihres Verstellwegs zwischen dem freien Ende und den Öffnungen 14 mittels eines Dichtrings 15 gegen die Buchse 3 abgedichtet, wie insbesondere Fig. 3 zeigt.

Der Meßwertgeber 2 hat einen zylindrischen Körper 16 mit einem Meßkopf 17 an seinem einen Ende. Der Meßwertgeber 2 ist axial in die Hülse 7 bis in die dargestellte Endlage eingeführt, in der der Meßkopf 17 in Höhe der Öffnungen 14 liegt. Zusätzlich ist der Körper 16 des Meßwertgebers 2 durch Dichtringe 18 und 19 gegen die Hülse 7 abgedichtet. Die Hülse 7 ist ihrerseits durch einen Dichtring 20 gegen die Buchse 3 abgedichtet. Der Körper 16 des Meßwertgebers 2 hat in der Nähe seines einen, aus der Hülse 7 herausragenden Endes einen umlaufenden Flansch oder Bund 21, der bei Einführung des Meßwertgebers 2 in die Hülse 7 an dem freien Ende des aus der Buchse 3 herausragenden Endabschnitts 12 anschlägt und damit die Endlage des Meßwertgebers 2 in der Hülse 7 bestimmt. In dieser Endlage ist der Meßwertgeber 2 durch eine Überwurfmutter 22 gesichert, die auf ein weiteres Gewinde 23 der Hülse 7 auf ihrem freien Endabschnitt 12 aufgeschraubt ist. Die Drehwinkellage des Meßwertgebers 2 nach Einführung in das Rohr oder Rohrstück wird durch sich diametral in bezug auf die Längsachse des Meßwertgebers bzw. der Hülse 7 gegenüberliegende Zapfen 24 bestimmt, die jeweils in eine von zwei sich diametral gegenüberliegenden axialen Nuten 25 im Bund 21 und im freien Ende des Endabschnitts 12 der Hülse 7 eingreifen.

Anstelle des Gewindes 23 kann die Hülse 7 mit einem Flansch versehen sein, der anstelle der Überwurfmutter 22 durch Schrauben mit dem dann mit größerem Durchmesser ausgebildeten Flansch 21 verbunden ist.

Der Verstellweg der Hülse 7 ist durch einen Bolzen 26 begrenzt, der mit seinem einen Ende mit der Hülse 7 in Mitnahmeverbindung steht. Mit seinem mittleren Abschnitt 27 ist der Bolzen 26 in einer axialen Nut 28 eines den zweiten Endabschnitt 8 der Buchse 3 umgebenden zweiten als Bund ausgebildeten Anschlags 29, der das Außengewinde 9 des zweiten Endabschnitts 8 der Buchse 3 aufweist, verschiebbar gelagert. An seinem anderen Ende ist der Bolzen 26 mit einem Kopf 30 versehen, der zwischen den beiden Anschlägen 6 und 29 liegt und dessen Durchmesser größer als die Weite der Nut 28 ist. Die Mitnahmeverbindung von Mutter 11 und Hülse 7 weist zwei die Hülse 7 unverschiebbar umgebende Ringe 31 und 32 auf, zwischen denen ein radial nach innen ragender, mit der Mutter 11 verbundener Vorsprung 33 eingreift.

Der Bolzen 26 hat an seinem einen Ende einen zweiten Kopf 34, der zwischen dem auf seiten der Buchse 3 liegenden Ring 31 und dem als Flansch ausgebildeten Vorsprung 33 der Mutter 11 eingreift. Der mittlere Abschnitt 27 liegt in einer axialen Nut 35 des auf seiten der Buchse 3 liegenden Rings 31.

Statt den Bolzen 26 mit dem Kopf 30 zu versehen, kann durch eine radiale Gewindebohrung in dem den größten Innendurchmesser aufweisenden Ende der Mutter 11 eine Schraube bis zwischen die Anschläge 6 und 29 eingeschraubt sein, die durch Anschlagen am Anschlag 29 den Verstellweg der Buchse 3 und der Hülse 7 relativ zueinander begrenzt.

Der als Bund ausgebildete erste Anschlag 6 ist am Umfang mehrkantig ausgebildet, um die Buchse mittels eines Maulschlüssels leichter in eine Gewindebohrung schrauben zu können.

Die Ringe 31 und 32 sind axial durch Gewindestifte 36 und 37 gesichert, die durch radiale Gewindebohrungen in den Ringen 31 und 32 hindurch in Ringnuten 38 und 39 am Umfang des Endabschnitts 12 der Hülse 7 eingreifen.

Ein in der Endlage des in die Hülse 7 eingeführten Meßwertgebers 2 weiterhin aus der Hülse 7 herausragender Endabschnitt ist z.B. als Stecker 40 für den Anschluß an eine Meßwertauswerteeinrichtung und Anzeigeeinrichtung ausgebildet.

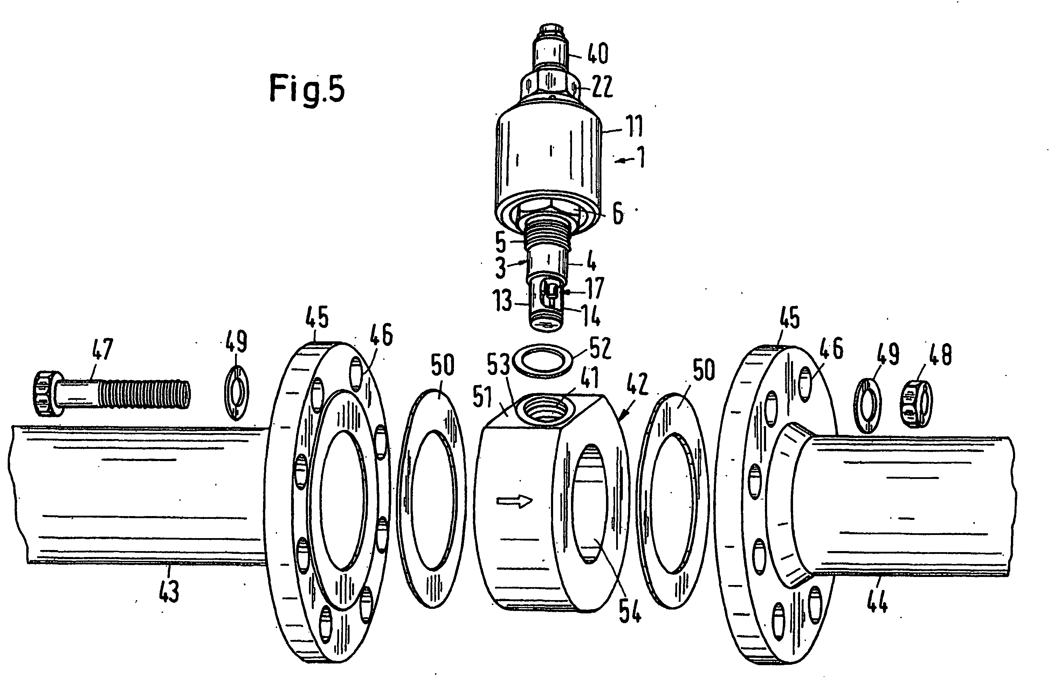

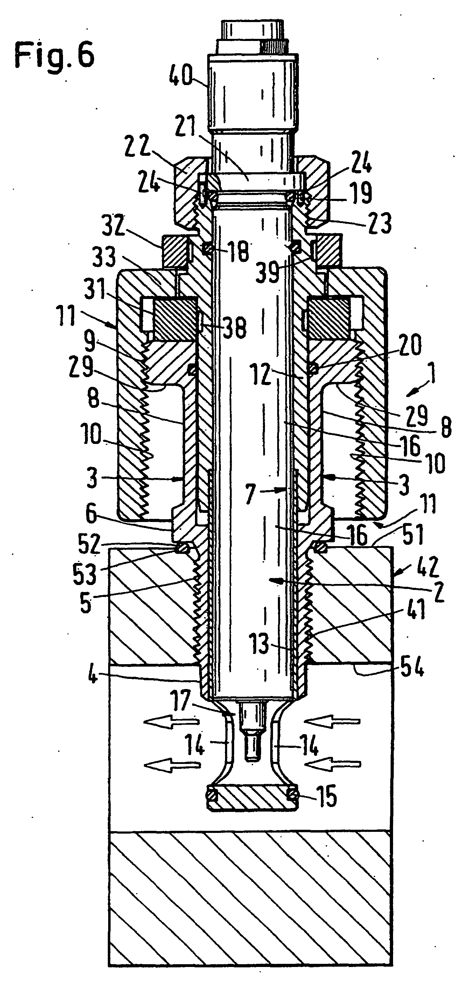

Nach den Fig. 5 und 6 ist die in den Fig. 1 bis 4 dargestellte Vorrichtung 1 mit dem Außengewinde 5 des Endabschnitts 4 der Buchse 3 in eine Gewindebohrung 41 in einem Rohrstück 42 eingeschraubt, das koaxial zwischen zwei getrennten Abschnitten 43, 44 eines Rohres eingebaut ist. Zu diesem Zweck sind die Enden der Abschnitte 43, 44 jeweils mit einem Flansch 45 versehen, der über seinen Umfang verteilte Bohrungen 46 zur Durchführung von Verbindungsschrauben 47, von denen nur eine dargestellt ist, versehen ist. Die Sicherung der Verbindungsschrauben 47 erfolgt durch Muttern 48 und Unterlegscheiben 49. Die Flansche 45 sind gegen das Rohrstück 42 durch flache Dichtringe 50 oder O-Ringe abgedichtet, die in eine passende (nicht dargestellte) Ringnut eingelegt sein können. Sie können sich dann nicht radial relativ zur Bohrung 54 des Rohrstückes 42 verschieben und ermöglichen dadurch einen stufenlosen, die Strömung nicht behindernden Übergang zwischen der Bohrung 54 des Rohrstücks 42 und den Bohrungen der Flansche 45. Das Rohrstück 42 hat einen vorbestimmten Durchtrittsquerschnitt. Durch den Einbau der Vorrichtung 1 in ein solches Rohrstück zwischen zwei getrennte Abschnitte, wie die Abschnitte 43, 44, eines Rohres, statt die Vorrichtung 1 unmittelbar in ein einteiliges Rohr einzubauen, wird erreicht, daß unabhängig von unterschiedlichen Innendurchmessern des Rohres stets ein definierter Durchtrittsquerschnitt für den Durchtritt eines Fluids vorliegt, dessen Durchfluß durch das Rohr mittels eines Meßwertgebers 2 gemessen werden soll, der als Maß für den Durchfluß lediglich die Strömungsgeschwindigkeit des durch das Rohr strömenden Fluids mißt. Der Durchfluß ergibt sich dann aus dem Produkt von Durchtrittsquerschnitt und Strömungsgeschwindigkeit.

Um die Vorrichtung 1 gegen das Rohrstück 2 abzudichten, wird zwischen dem Anschlagbund 6 und einer Abflachung 51 des Rohrstücks 42 ein Dichtring 52, z.B. ein O-Ring, angeordnet. Dieser Dichtring 52 kann in einer Ringnut 53 am Umfang der Gewindebohrung 41 angeordnet sein.

Um den Meßwertgeber 2 auszubauen, sei es, um ihn auszuwechseln oder um ihn zu reinigen, wird zunächst die Mutter 11 auf dem Gewinde 9 so weit nach oben und dabei die Hülse 7 über den Vorsprung 33, den Ring 32, den Gewindestift 37 und die Nut 39 so weit mitgenommen, bis der Kopf 30 des Bolzens 26 am Endanschlag 29 anschlägt. In dieser Lage liegt der Endabschnitt 13 der Hülse 7 vollständige innerhalb der Buchse 3, wie es in Fig. 3 dargestellt ist. Ferner ist die Hülse 7 in dieser Lage durch den Dichtring 15 gegen die Buchse 3 abgedichtet. Gleichzeitig bleibt auch die Bohrung 54 des Rohrstücks 42 nach außen abgedichtet, so daß das Fluid nicht aus dem Inneren des Rohres bzw. des Rohrstücks 42 über die Gewindebohrung 41 austreten kann. Danach ist es möglich, die Überwurfmutter 22 von der Hülse 7 abzuschrauben und den Meßwertgeber 2 aus der Hülse 7 herauszuziehen. In umgekehrter Weise kann dann ein anderer oder derselbe Meßwertgeber 2 wieder in die Hülse 7 eingeführt und durch Zurückdrehen der Mutter 11 die Hülse 7 zusammen mit dem Meßwertgeber 2 nach dem Aufschrauben der Überwurfmutter 22 bis zum Anschlagen des Kopfes 30 des Bolzens 26 am Anschlag 6 und/oder des Rings 31 am Anschlag 29 in die in den Fig. 1, 2 und 6 dargestellte Lage vorgeschoben werden, in der das Fluid durch die Öffnungen 14 am Meßkopf 17 vorbeiströmen kann, um die Strömungsgeschwindigkeit bzw. den Durchfluß zu messen. Auch bei dieser Einführung des Meßwertgebers 2 in das Fluid kann das Fluid nicht durch die Gewindebohrung 41 des Rohrstücks 42 austreten.

Alternativ können das Gewinde der Bohrung 41 und das Gewinde 5 der Buchse 3 bei dem Ausführungsbeispiel nach den Fig. 5 und 6 entfallen und die Buchse 3 am Rand der Bohrung 41 oder einem die Bohrung verlängernden Anschlußstutzen angeschweißt werden, wobei dann bei einem Defekt der Vorrichtung 1 oder einer Vorrichtung 1 mit einem anderen Meßwertgeber die Vorrichtung 1 mitsamt dem Rohrstück 42 ausgewechselt werden kann.

Ferner kann das Rohrstück 42 auch mit weiteren über seinen Umfang verteilten radialen Bohrungen oder an solchen Bohrungen angeschweißten Anschlußstutzen mit Gewinde versehen sein, an denen mehrere Vorrichtungen 1 mit gleichen oder verschiedenen Meßwertgebern angeschlossen werden können. Die nicht benötigten Bohrungen oder Anschlußstutzen können mittels Stopfen verschlossen sein.

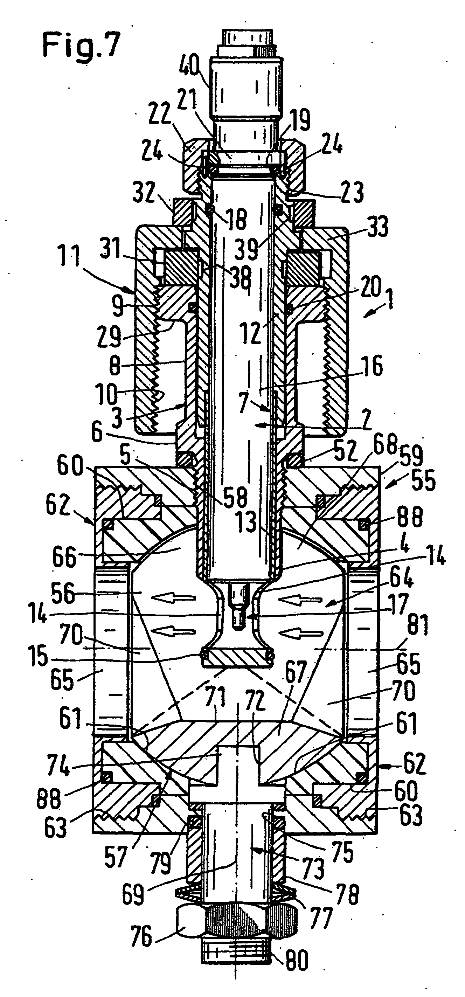

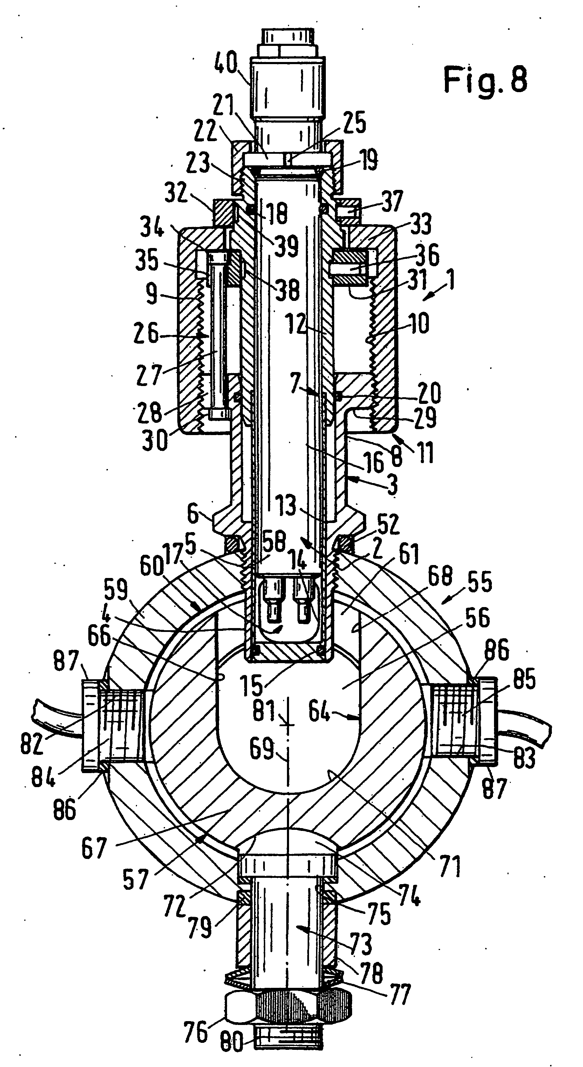

Nach den Fig. 7 und 8 bildet ein Rohrstück 55, das ebenso wie das Rohrstück 42 nach den Fig. 5 und 6 zwischen den Abschnitten 43 und 44 eines Rohres eingebaut werden kann oder mit Gewindeanschlüssen für ebenfalls mit Gewinde versehene Endabschnitte eines Rohres versehen ist, das Gehäuse eines der Absperrung und Freigabe des Durchflusses des Fluids durch das Rohr und der Ausbildung eines abgeschlossenen Hohlraums 56 im Sperrzustand dienenden Kugelventils. Die Hohlkugel 57 des Kugelventils begrenzt im Sperrzustand zusammen mit dem Rohrstück 55 den Hohlraum 56 und ist zu einer im Rohrstück 55 ausgebildeten Gewindebohrung 58 hin und quer dazu offen.

Das Rohrstück 55 hat einen äußeren im wesentlichen zylindrischen Gehäuseteil 59, darin eingesetzte Gleitringe 60 aus Kunststoff, wie PTFE, deren kugelkalottenförmige Innenflächen 61 den Ventilsitz für die das Ventilverschlußstück bildende Hohlkugel 57 bilden. Zur Absicherung der Gleitringe 60 enthält das Rohrstück 55 Sicherungsringe 62, die Außengewinde aufweisen und in koaxiale Gewindebohrungen 63 des Gehäuseteils 59 geschraubt sind. Die Gleitringe 60 sind axial getrennt, können jedoch auch einteilig ausgebildet sein. Statt aus Kunststoff können sie ferner aus Metall bestehen.

Die das Ventilverschlußstück bildende Hohlkugel 57 hat einen Durchflußkanal 64, der sich an die Öffnungen 65 der Sicherungsringe 62 anschließt. Die Öffnungen 65 haben einen vorbestimmten Durchflußquerschnitt für den Durchfluß des Fluids, und zwar aus den gleichen Gründen wie das Rohrstück 42 nach den Fig. 5 und 6. Der Durchflußkanal 64 ist durch Seitenwände 66, einen die Seitenwände 66 verbindenden Steg 67 und durch die Gleitringe 60 begrenzt. Auf der dem Verbindungssteg 66 abgekehrten Seite der Hohlkugel 57 ist der Durchflußkanal 64 mit einem in Durchflußrichtung und radial durchgehenden Durchbruch 68 versehen. Die Hohlkugel 57 ist um eine zur Durchflußrichtung senkrechte und durch die Mitte des Durchbruchs 68 verlaufende Drehachse 69 drehbar in dem Rohrstück 55 gelagert.

Koaxial zur Drehachse 69 ist die Gewindebohrung 58 im Rohrstück 55 ausgebildet. Die Gewindebohrung 58 nimmt den Meßwertgeber 2 zum Messen einer physikalischen Gröβe, vorzugsweise des Durchflusses, des pH-Werts oder des Sauerstoffgehalts, des den Durchflußkanal 64 durchströmenden Fluids auf.

Der Steg 67 springt im Axialschnitt nach Fig. 7 radial nach innen vor, wobei sich der Querschnitt von Endabschnitten 70 des Durchflußkanals 64 auf der dem Durchbruch 68 gegenüberliegenden Seite konisch von den Enden des Durchflußkanals 64 aus verringert und zwischen diesen Endabschnitten 70 einen Teil 71 eines Kreiszylinders bildet.

Um die das Ventilverschlußstück bildende Hohlkugel 57 zu drehen, ist in einem Querschlitz 72 ihres Steges 67 ein Betätigungsschaft 73 mit einem flachen Endabschnitt 74 eingesetzt. Der Betätigungsschaft 73 durchsetzt eine weitere zur Drehachse 69 koaxiale Bohrung 75 des Rohrstücks 55, in der er drehbar und gegen die Bohrung 75 abgedichtet gelagert ist. Eine auf einen Gewindeabschnitt des Betätigungsschaftes 73 geschraubte Sicherungsmutter 76 stützt sich über Tellerfedern 77, eine Hülse 78 und eine Dichtung 79 an einer inneren Schulter der Bohrung 75 ab. Der äußere Endabschnitt 80 des Schaftes 73 ist zum Aufschrauben eines nicht dargestellten Betätigungshebels mit Gewinde versehen.

In der dargestellten geöffneten Stellung des Kugelventils kann das Fluid den Durchflußkanal 64 durchströmen, wobei es durch den zuerst durchströmten konischen Endabschnitt 70 und den radial nach innen vorspringenden Steg 67 in Richtung zur Bohrung 58 beziehungsweise den Meßkopf 17 hin umgelenkt wird, ohne daß der Vorsprung des Stegs 67 den Durchfluß des Fluids behindert. Die Länge des in den Durchflußkanal 64 ragenden Abschnitts des Meßwertgebers 2 braucht hierbei, unabhängig von dem Innendurchmesser des Rohres beziehungsweise der Öffnungen 65, nur so lang gewählt werden, daß er mit dem Fluid im Durchflußkanal 64 in Berührung kommt, da die Wandstärke des Rohrstücks 55 unabhängig vom Innendurchmesser beziehungsweise der Wandstärke des durch die Abschnitte 43, 44 (Fig. 5) gebildeten Rohres ist. Eventuelle Schmutzteilchen in dem Fluid, die bestrebt sind, sich in dem unteren Hohlraumbereich des Durchflußkanals 64 abzulagern, werden durch die Strömung des Fluids bei geöffnetem Ventil mitgeführt. Dies gilt auch bei einem um 180° um die Längsachse 81 des Rohrstücks 55 bzw. des Ventilgehäuses gegenüber der dargestellten Lage gedrehter Einbaulage des Rohrstücks 55 beziehungsweise Gehäuses im Rohr, das heißt zwischen den Abschnitten 43 und 44.

Der Meßwertgeber kann auch bei geöffnetem Ventil, wie bei dem Ausführungsbeispiel nach den Fig. 5 und 6, einund ausgebaut werden, ohne das Ventil zu schließen und damit den Durchfluß und gegebenenfalls den Betrieb einer mit dem Fluid versorgten Anlage zu unterbrechen.

Eine Abwandlung kann darin bestehen, daß der Steg 67 noch weiter nach innen vorstehend ausgebildet wird, wie es durch die gestrichelten Linien in Fig. 7 dargestellt ist. Hierdurch ergäbe sich eine noch stärkere Umlenkung der Strömung in Richtung auf den Meßkopf 17, jedoch wäre auch der Durchfluß etwas stärker behindert als bei der Ausbildung mit dem Kreiszylinderteil 71.

In einer mit der Drehachse 69 zusammenfallenden, senkrecht zur Durchflußrichtung beziehungsweise Achse 81 stehenden Querebene des Rohrstücks 55 bzw. Ventilgehäuses sind zwei weitere Bohrungen 82 und 83 (Fig. 8) mit Innengewinde ausgebildet. Diese Bohrungen 82 und 83 durchsetzen die Ventilsitzfläche 61 und sind für den Anschluß jeweils eines weiteren Meßwertgebers 84 und 85 mit Außengewinde ausgebildet. Bei den Meßwertgebern 84 und 85 handelt es sich um solche, die nicht unmittelbar mit dem den Durchflußkanal 64 durchströmenden Fluid in Berührung kommen müssen, beispielsweise um einen Druck, Feuchte-, Sauerstoff- oder Temperaturfühler. Gegebenenfalls kann den Meßwertgebern 2 und 84 ein Meßwandler nachgeschaltet sein, zum Beispiel ein Rechner, der den Meßwert des Meßwertgebers 2 in Abhängigkeit von der durch den Meßwertgeber 84 gemessenen Temperatur korrigiert, bevor er angezeigt wird. Selbst wenn die beiden Gleitringe 60 nicht getrennt, sondern einteilig ausgebildet sind, würde der Temperaturfühler 84 dennoch, auch in der geöffneten Stellung der das Ventilverschlußstück bildenden Hohlkugel 57, wie es in den Fig. 7 und 8 dargestellt ist, indirekt die Temperatur des Fluids messen.

Wenn der Meßwertgeber 84 als Druckfühler ausgebildet ist, kann er den Druck bei geöffnetem Ventil, wie dargestellt, messen, da sich der Druck des Fluids auch bei einteiliger Ausbildung der Gleitringe 60 durch den unvermeidlichen, wenn auch engen Spalt zwischen der Hohlkugel 57 und dem Gleitring 60 oder den Gleitringen 60 bis zum Druckfühler fortpflanzen würde.

Zweckmäßigerweise ist der Meßwertgeber 84 als Temperaturfühler, der Meßwertgeber 85 als Druckfühler und der Meßwertgeber 2 als Durchfluß-, pH-Wert- oder Gasfühler ausgebildet, so daß drei Meßgrößen des Fluids gleichzeitig erfaßt und die Meßgrößen der Meßwertgeber 2 und 85 gleichzeitig temperaturkompensiert werden können.

Es ist aber auch möglich, drei gleiche Druckfühler vorzusehen, zum Beispiel aus Sicherheitsgründen in Kernkraftwerken, wobei die Meßwerte der drei Druckfühler auf das Auftreten von Abweichungen durch einen Vergleicher verglichen werden und eine Abweichung gemeldet wird, um Fehler in der Meßeinrichtung festzustellen.

Die Bohrungen 82 und 83 haben den weiteren Vorteil, daß sie bei geschlossenem Ventil, das heißt wenn die Hohlkugel 57 um 90° gegenüber der dargestellten Lage gedreht worden ist, und nach Entfernen der Meßwertgeber 84 und 85 ein Durchspülen des Ventils durch die Bohrungen 82 und 83 hindurch ermöglichen, um den Meßwertgeber 2 von eventuellen Ablagerungen zu reinigen, ohne ihn aus dem Ventil ausbauen zu müssen. Desgleichen kann bei geschlossenem Ventil einer der Meßwertgeber herausgeschraubt werden, wobei gleichzeitig der in der Hohlkugel 57 herrschende Druck allmählich abgebaut werden kann, und statt dessen eine Druckquelle mit definiertem Druck angeschlossen werden, um die Meßgenauigkeit eines der beiden anderen Meßwertgeber, der als Druckfühler ausgebildet ist, zu prüfen. Auf die gleiche Weise kann auch die Meßgenauigkeit der anderen Meßwertgeber durch den Anschluß einer Fluidquelle mit bekannten physikalischen Größen des Fluids an eine Bohrung geprüft werden.

Eventuelle Spalte zwischen den Bohrungen 82, 83 und den Meßwertgebern 84, 85 sind, wie bei der Vorrichtung 1, durch Dichtringe 86 zwischen einem Flansch 87 oder einer Schulter der Meßwertgeber 84, 85 und ebenen Flächen, die jeweils einen der Öffnungsränder der Bohrungen 82 und 83 umgeben, abgedichtet.

Zwischen den Gleitringen 60 und in den Innenseiten der Sicherungsringe 62 ausgebildeten Ringnuten, in die die Gleitringe 60 eingreifen, sind elastische Dichtringe 88 in Form von O-Ringen eingesetzt. Diese Dichtringe 88 sorgen hauptsächlich bei geschlossenem Ventil, während einer der Meßwertgeber 84, 85 eingesetzt wird, für eine Abdichtung der Gleitringe 60 nicht nur gegen die Sicherungsringe 62, sondern auch gegen die Hohlkugel 57, vornehmlich auf der dem Fluiddruck zugekehrten Seite der Hohlkugel 57. So würde die Hohlkugel 57 in der Schließstellung unter dem Fluiddruck zwar dicht gegen den einen Gleitring 60 gedrückt, jedoch vom anderen Gleitring 60 weggedrückt. Der zwischen dem anderen Gleitring 60 und dem zugehörigen Sicherungsring 62 angeordnete Dichtring 88 drückt dann den auf der Fluiddruckseite liegenden Gleitring 60 gegen die Hohlkugel 57 und bewirkt auf diese Weise eine bessere Abdichtung.

Auch wenn anstelle der getrennten Gleitringe 60 ein einteiliger Gleitring verwendet würde, bei dem zwar der Einbau der Hohlkugel 57 in den Gleitring schwierig, bei hinreichender Elastizität des Gleitrings und größerem Durchmesser der Hohlkugel 57 aber möglich wäre, ergäben sich durch die Verwendung der Dichtringe die gleichen Vorteile wie bei getrennten Gleitringen.

Eine Abwandlung des in den Fig. 7 und 8 dargestellten Ausführungsbeispiels kann darin bestehen, daß der Betätigungsschaft 73 mit einer Sackbohrung versehen ist, in die ein weiterer Temperaturfühler einführbar ist.

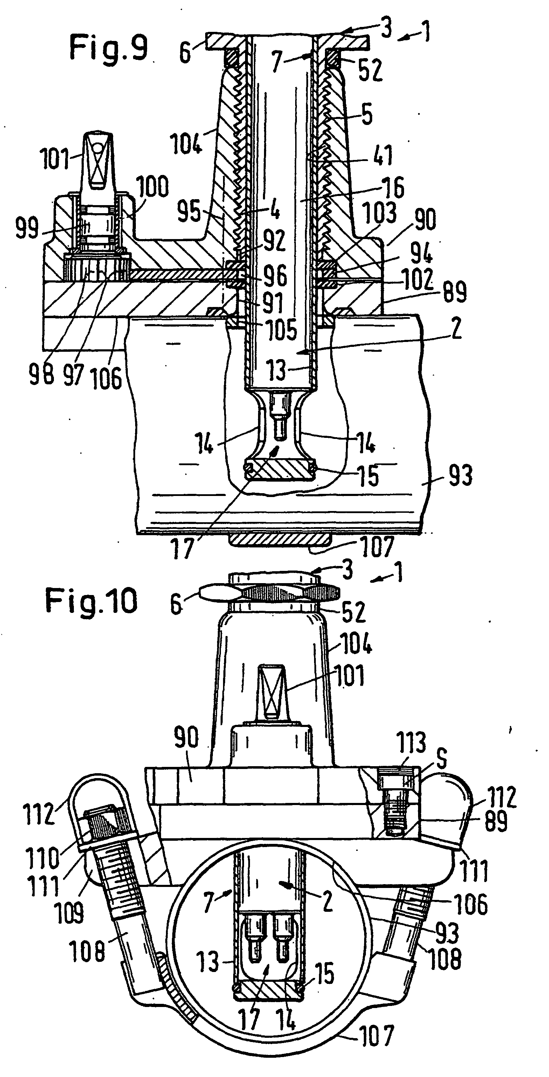

Nach den Fig. 9 und 10 sind zwei Platten 89 und 90 übereinanderliegend durch Schrauben S, von denen nur eine dargestellt ist, miteinander verbunden. Jede Platte 89, 90 hat eine Durchgangsöffnung 91, 92, die den gleichen Durchmesser aufweisen und zueinander koaxial sind. Die eine Platte 89 ist am Umfang eines Rohres 93, das von einem Fluid durchströmt wird, dicht anliegend so befestigt, daß zwischen den Platten 89, 90 eine Scheibe 94 um eine zu den Durchgangsöffnungen 91, 92 exzentrische Achse 95 in eine die Durchgangsöffnungen sperrende Lage drehbar gelagert ist. Die Scheibe 94 hat ein Loch 96, das durch Drehung der Scheibe 94 mit den Durchgangsöffnungen 91, 92 zur Deckung gebracht werden kann. Die Scheibe 94 ist am Umfang mit Zähnen 97 versehen, die mit einem Ritzel 98 in Eingriff stehen. Das Ritzel 98 ist am inneren Ende einer Welle 99 befestigt, die zusammen mit dem Ritzel 98 in einer durch die Platte 90 und einen daran angeformten Stutzen 100 durchgehenden Bohrung drehbar gelagert ist und mit einem mehrkantigen Abschnitt 101 zum Aufsetzen eines Mehrkantschlüssels nach außen ragt. Die Scheibe 94 ist durch Dichtringe 102 und 103 am Rande ihres Loches 96 und der Durchgangsöffnungen 91, 92 gegen die Platten 89, 90 abgedichtet. Die Platte 89 ist ferner am Umfang des Rohres 93 dicht anliegend befestigt. Koaxial zur Durchgangsöffnung 92 der dem Rohr 93 abgekehrten Platte 90 ist ein die Gewindebohrung 41 aufweisender Stutzen 104 angeformt. In der Gewindebohrung 41 ist der erste Endabschnitt 4 der Buchse 3 der Vorrichtung 1 mit seinem Außengewinde 5 eingeschraubt, so daß der Endabschnitt 4 mit seinem freien Ende an dem Dichtring 103 anliegt. Bei dieser Ausführungsform kann das Gewinde 5 entsprechend der Länge des Stutzens 104 axial etwas länger, wie dargestellt, als bei dem vorhergehenden Ausführungsbeispiel sein.

Die am Rohr 93 anliegende Platte 89 hat in ihrer dem Rohr 93 zugekehrten Seite eine teilzylindrische Aussparung 106 mit einem dem Krümmungsradius des Rohrumfangs angepaßten Krümmungsradius. Zwei Ränder dieser Platte 89 sind durch ein spannbares Metallband 107 verbunden, das an der den Platten 89, 90 abgekehrten Seite des Rohres 93 anliegt. Diese Verbindung ist in der Weise ausgebildet, daß an den Enden des Metallbandes 107 jeweils eine Gewindestange 108 befestigt, zum Beispiel angeschweißt, und durch eine Nut 109 im jeweiligen Rand der Platte 89 hindurchgeführt und durch eine Mutter 110 über eine Unterlegscheibe 111 am Rand befestigt ist. Ferner ist jede Mutter 110 mit einer Abdeckhaube 112 versehen. Die Schrauben S sind mittels einer Dichtmasse 113 vergossen.

Sofern das Loch 105 noch nicht in dem Rohr 93 ausgebildet ist, ist es bei dieser Ausbildung möglich, in einer Drehwinkelstellung der Scheibe 94, in der ihr Loch 96 mit den Durchgangsöffnungen 91, 92 der Platten 89, 90 fluchtet, ein Bohrwerkzeug in den Stutzen 104 abgedichtet einzuschrauben, so daß der Bohrer mit Spiel in den Stutzen 104 ragt, und dann durch Vorschieben und Drehen des Bohrers das Loch 105 in das Rohr 93 zu bohren, während weiterhin das Fluid durch das Rohr 93 strömt. Das Bohren des Loches erfordert mithin keine Unterbrechung des Fluidstroms im Rohr 93 und keine Betriebsunterbrechung einer mit dem Fluid durch das Rohr 93 hindurch versorgten Anlage, zum Beispiel einer mit Wasser gekühlten Anlage. Nach dem Bohren des Loches 105 wird der Bohrer nur so weit innerhalb des Stutzens 104 zurückgezogen, bis er außerhalb der Durchgangsöffnungen 91, 92 der Platten 89, 90 liegt, während das Bohrwerkzeug weiterhin den Stutzen 104 dicht verschließt. Danach wird die Scheibe 94 in eine Drehwinkelstellung gedreht, in der ihr Loch 96 außerhalb der Durchgangsöffnungen 91, 92 liegt und die Scheibe 94 diese Durchgangsöffnungen 91, 92 verschließt. In dieser Schließlage der Scheibe 94 kann das Bohrwerkzeug aus dem Stutzen 104 herausgeschraubt und statt dessen die Buchse 3 abgedichtet in den Stutzen 104 bis an den Dichtring 103 eingeschraubt werden. Danach wird die Scheibe 94 wieder in die dargestellte Öffnungslage gedreht, in der ihr Loch mit den Durchgangsöffnungen 91, 92 und dem in das Rohr 93 gebohrten Loch 105 fluchtet. In dieser Öffnungslage kann die Hülse 7 zusammen mit dem Meßwertgeber 2 mittels der Mutter 11 durch die Durchgangsöffnungen 91, 92 und Löcher 96, 105 hindurch bis in das Rohr 93 eingeführt werden, ohne die Fluidströmung im Rohr 93 zu unterbrechen. Wenn der Meßwertgeber 2 ausgewechselt oder gewartet werden soll, kann er wie bisher, nach dem Zurückziehen der Hülse 7 in die Buchse 3, aus der Hülse 7 entfernt oder in diese eingeführt werden, ohne den Fluidstrom zu unterbrechen. Alternativ kann auch die Buchse 3 mitsamt Meßwertgeber 2 ausgewechselt werden, nachdem die Scheibe 94 in ihre Schließlage gedreht wurde. Auch hierbei braucht der Fluidstrom im Rohr 93 nicht unterbrochen zu werden, da das Fluid in der Schließlage der Scheibe 94 weiterhin nicht durch das Loch 105 des Rohres und durch die Durchgangsöffnungen 91, 92 austreten kann.

## Patentansprüche

1. Vorrichtung zum dichten Ein- und Herausführen eines Meßwertgebers (2) in ein bzw. aus einem Fluid in einem Rohr (42, 43, 44; 55, 43, 44; 93), mit einer Buchse (3), die einen ersten Endabschnitt (4) aufweist, der abgedichtet in eine Bohrung (41; 58; 105) des Rohrs (42, 43, 44; 55, 43, 44; 93) bis in das Fluid im Rohr (42, 43, 44; 55, 43, 44; 93) einführbar und mit einem ersten Anschlag (6) zur Einführungsbegrenzung versehen ist, **dadurch gekennzeichnet, daß** in der Buchse (3) eine Hülse (7) axial über einen begrenzten Verstellweg verschiebbar gelagert ist, daß die Buchse (3) einen zweiten mit Außengewinde (9) versehenen Endabschnitt (8) aufweist, der mit dem Innengewinde (10) einer Mutter (11) zusammenwirkt, daß die Mutter (11) mit einem aus dem zweiten Endabschnitt (8) der Buchse (3) abgedichtet herausragenden ersten Endabschnitt (12) der Hülse (7) in Mitnahmeverbindung steht, daß ein zweiter Endabschnitt (13) der Hülse (7), wenn sich die Hülse (7) am einen Ende ihres Verstellwegs befindet, aus dem ersten Endabschnitt (4) der Buchse (3) herausragt und, wenn sich die Hülse (7) am anderen Ende ihres Verstellwegs befindet, innerhalb der Buchse (3) liegt, daß der zweite Endabschnitt (13) der Hülse (7) mit radial fluchtenden Öffnungen (14) für einen weitgehend ungehinderten Durchgang des Fluids versehen und an seinem freien Ende geschlossen ist, daß der zweite Endabschnitt (13) der Hülse (7), wenn sich die Hülse (7) am anderen Ende ihres Verstellwegs befindet, zwischen dem freien Ende des zweiten Endabschnitts (13) der Hülse (7) und den Öffnungen (14) gegen die Buchse (3) abgedichtet ist und daß der Meßwertgeber (2) einen zylindrischen Körper (16) mit einem Meßkopf (17) an einem Ende aufweist und in die Hülse (7) axial und gegen die Hülse (7) abgedichtet bis in eine Endlage relativ zur Hülse (7) einführbar ist, in der der Meßkopf (17) in Höhe der Öffnungen (14) liegt und in der der Meßwertgeber (2) in Mitnahmeverbindung mit der Hülse (7) bringbar ist.

2. Vorrichtung nach Anspruch 1, **dadurch gekennzeichnet, daß** innerhalb der Mutter (11) ein Bolzen (26) angeordnet ist, der mit seinem einen Ende mit der Hülse (7) in Mitnahmeverbindung steht, mit seinem mittleren Abschnitt (27) in einer axialen Nut (28) eines am zweiten Endabschnitt (8) der Buchse (3) ausgebildeten zweiten Anschlags (29), der das Außengewinde (9) des zweiten Endabschnitts (8) der Buchse (3) aufweist, verschiebbar gelagert ist, und daß der Verstellweg der Hülse (7) durch den zweiten Anschlag (29) begrenzt ist.

3. Vorrichtung nach Anspruch 2, **dadurch gekennzeichnet, daß** der Bolzen (26) an seinem anderen Ende mit einem Kopf (30) versehen ist, der zwischen den beiden Anschlägen (6, 29) liegt und dessen Durchmesser größer als die Weite der Nut (28) ist.

4. Vorrichtung nach einem der Ansprüche 1 bis 3, **dadurch gekennzeichnet, daß** die Mitnahmeverbindung von Mutter (11) und Hülse (7) zwei die Hülse (7) unverschiebbar umgebende Ringe (31, 32) aufweist, zwischen denen ein radial nach innen ragender, mit der Mutter (11) verbundener Vorsprung (33) eingreift.

5. Vorrichtung nach den Ansprüchen 2 bis 4, **dadurch gekennzeichnet, daß** der Bolzen (26) an seinem einen Ende einen zweiten Kopf (34) aufweist, der zwischen dem auf seiten der Buchse (3) liegenden Ring (31) und dem als Flansch ausgebildeten Vorsprung (33) der Mutter (11) eingreift.

6. Vorrichtung nach Anspruch 5, **dadurch gekennzeichnet, daß** der mittlere Abschnitt (27) des Bolzens (26) in einer axialen Nut (35) des auf seiten der Buchse (3) liegenden Rings (31) liegt.

7. Vorrichtung nach einem der Ansprüche 1 bis 6, **dadurch gekennzeichnet, daß** der Körper (16) des Meßwertgebers (2) mit einem Flansch (21) versehen ist, der in der Endlage der Einführung des Meßwertgebers (2) in die Hülse (7) durch eine Schraubverbindung am freien Ende des ersten Endabschnitts (12) der Hülse (7) anliegend gehalten ist.

8. Vorrichtung nach Anspruch 7, **dadurch gekennzeichnet, daß** die Schraubverbindung durch eine den Flansch (21) des Meßwertgeber-Körpers übergreifende und auf den ersten Endabschnitt (12) der Hülse (7) geschraubte Überwurfmutter (22) bewirkt ist.

9. Vorrichtung nach einem der Ansprüche 1 bis 8, **dadurch gekennzeichnet, daß** der erste Endabschnitt (4) der Buchse (3) mit einem Außengewinde (5) versehen und die Bohrung (41; 58) eine Gewindebohrung ist, in das das Außengewinde (5) einschraubbar ist.

10. Vorrichtung nach einem der Ansprüche 1 bis 5, **dadurch gekennzeichnet, daß** der erste Anschlag (6) ein am Umfang mehrkantiger Bund ist.

11. Vorrichtung nach Anspruch 10, **dadurch gekennzeichnet, daß** sie ein Rohrstück (42; 55) aufweist, in der die Gewindebohrung (41; 58) ausgebildet ist und das koaxial zwischen zwei Abschnitten (43, 44) des Rohres eingebaut wird und einen vorbestimmten Durchtrittsquerschnitt aufweist.

12. Vorrichtung nach Anspruch 11, **dadurch gekennzeichnet, daß** das Rohrstück (55) das Gehäuse eines der Absperrung und Freigabe des Durchflusses des Fluids durch das Rohr und der Ausbildung eines abgeschlossenen Hohlraums (56) im Sperrzustand dienenden Kugelventils bildet, dessen Hohlkugel (57) im Sperrzustand zusammen mit dem Rohrstück (55) den Hohlraum (56) begrenzt und zur Gewindebohrung (58) hin und quer dazu offen ist.

13. Vorrichtung nach Anspruch 11, **dadurch gekennzeichnet, daß** die eine von zwei übereinanderliegend verbundenen Platten (89, 90), die je eine zur anderen koaxiale Durchgangsöffnung (91, 92) aufweisen, am Umfang des Rohres (93) dicht anliegend so befestigt ist, daß zwischen den Platten (89, 90) eine Scheibe (94) um eine zu den Durchgangsöffnungen (91, 92) exzentrische Achse (95) in eine die Durchgangsöffnungen (91, 93) sperrende Lage drehbar und gegen die Platten abgedichtet gelagert ist, daß die Scheibe (94) mit den Durchgangsöffnungen (91, 92) zur Deckung bringbar ist, und daß koaxial zur Durchgangsöffnung (92) der dem Rohr (93) abgekehrten anderen Platte (90) ein die Gewindebohrung (41) aufweisender Stutzen (104) angeformt ist, in den der erste Endabschnitt (4) der Buchse (3) mit seinem Außengewinde (5) abgedichtet einschraubbar ist.

14. Vorrichtung nach Anspruch 13, **dadurch gekennzeichnet, daß** die am Rohr (93) anliegende Platte (89) in ihrer dem Rohr (93) zugekehrten Seite eine teilzylindrische Aussparung (106) mit einem dem Krümmungsradius des Rohrumfangs angepaßten Krümmungsradius aufweist und zwei Ränder dieser Platte (89) durch ein spannbares Metallband (107), das an der den Platten (89, 90) abgekehrten Seite des Rohres (93) anliegt, verbunden sind.

## Claims

1. Device for introducing/extracting a transducer (2) in/from a fluid in a pipe (42, 43, 44; 55, 43, 44; 93), with a bushing (3), comprising a first end-section (4), which can be introduced sealingly in a bore (41; 58; 105) of the pipe (42, 43, 44; 55, 43, 44; 93) as far as the fluid in the pipe (42, 43, 44; 55, 43, 44; 93) and is provided with a first limit stop (6) for limiting its introduction, **characterised in that** a casing (7) is axially displaceably mounted in the bushing (3) over a limited adjustment range, whereby the bushing (3) has a second end-section (8) provided with an outer thread (9), which engages with the inner thread (10) of a nut (11), said nut (11) being connected in synchronization with a first end-section (12) of the casing (7) sealingly protruding from the second end-section (8) of the bushing (3); a second end-section (13) of the casing (7), if the casing (7) is located at the end of its adjustment range, protrudes from the first end-section (4) of the bushing (3) and, if the casing (7) is located at the other end of its adjustment range, sits inside the bushing (3), whereby the second end-section (13) of the casing (7) is provided with radially flush openings (14) for generally unhindered escape of the fluid and is closed at its free end; the second end-section (13) of the casing (7), if the casing (7) is located at the other end of its adjustment range, is sealed against the bushing (3) between the free end of the second end-section (13) of the casing (7) and the openings (14) and whereby the transducer (2) at one end has a cylindrical body (16) with a measurement head (17) and can be sealingly introduced in the casing (7) axially and against the casing (7) as far as one end position relative to the casing (7), in which the measurement head (17) is level with the openings (14) and in which the transducer (2) can be moved in synchronization with the casing (7).

2. Device according to Claim 1, **characterised in that** a pin (26) is arranged inside the nut (11), which with its one end is connected in synchronization with the casing (7), with its middle section (27) displaceably mounted in an axial groove (28) of a second limit stop (29), that having the outer thread (9) of the second end-section (8) of the bushing (3) is formed on the second end-section (8) of the bushing (3), and whereby the adjustment range of the casing (7) is limited by the second limit stop (29).

3. Device according to Claim 2, **characterised in that** the pin (26) at its other end is provided with a head (30), which lies between the two limit stops (6, 29) and whose diameter is greater than the width of the groove (28).

4. Device according to any one of Claims 1 to 3, **characterised in that** the synchronized connection of nut (11) and casing (7) has two rings (31, 32) statically encompassing the casing (7), between which engages a projection (33) protruding radially inwards and connected with the nut (11).

5. Device according to Claims 2 to 4, **characterised in that** the pin (26) at its one end has a second head (34), which engages between the ring (31) placed on the side of the bushing (3) and the projection (33) of the nut (11) formed as a flange.

6. Device according to Claim 5, **characterised in that** the middle section (27) of the pin (26) lies in an axial groove (35) of the ring (31), placed on the side of the bushing (3).

7. Device according to any one of Claims 1 to 6, **characterised in that** the body (16) of the transducer (2) is provided with a flange (21), which at the end position after the transducer (2) has been introduced in the casing (7) is held against the free end of the first end-section (12) of the casing (7) by a threaded connection.

8. Device according to Claim 7, **characterised in that** the threaded connection is implemented by a union nut (22) gripping over the flange (21) of the transducer body and screwed onto the first end-section (12) of the casing (7).

9. Device according to any one of Claims 1 to 8, **characterised in that** the first end-section (4) of the bushing (3) is provided with an outer thread (5) and the bore (41; 58) is a tapped hole, in which the outer thread (5) can be screwed.

10. Device according to any one of Claims 1 to 5, **characterised in that** the first limit stop (6) is a collar multi-angled on its periphery.

11. Device according to Claim 10, **characterised in that** it has a pipe (42; 55), in which the tapped hole (41; 58) is formed and which is inserted coaxially between two sections (43, 44) of the pipe and has a pre-determined opening profile.

12. Device according to Claim 11, **characterised in that** the pipe (55) forms the housing of a ball valve designed to close and release the flow of the fluid through the pipe and to form a sealed cavity (56) in the closed state, the hollow ball (57) of which limits the cavity (56) in the closed state together with the pipe (55) and is open to the tapped hole (58) away and crosswise thereto.

13. Device according to Claim 11, **characterised in that** the one of two plates (89, 90) connected overlying one another, each of which has an opening (91, 92) coaxial to the other, is attached closely against the periphery of the pipe (93) so that between the plates (89, 90) a disk (94) can be rotated around an axis (95) eccentric to the openings (91, 92) into a position closing the openings (91, 93) and is sealingly mounted against the plates so that the disk (94) can be moved to overlap the openings (91, 92) and so that coaxially to the opening (92) a flange (104) having the tapped hole (41), into which the first end-section (4) of the bushing (3) can be sealingly screwed with its outer thread (5), is moulded on the other plate (90) turned away from the pipe (93).

14. Device according to Claim 13, **characterised in that** the plate (89) lying against the pipe (93) in its side turned towards the pipe (93) has a semi-cylindrical recess (106) with a curvature radius matching the curvature radius of the pipe periphery and two edges of this plate (89) are connected by an expandable metal strap (107), placed on the side of the pipe (93) turned away from the plates (89, 90).

## Revendications

1. Dispositif pour introduire et ressortir d'une manière étanche un transmetteur de valeur de mesure (2) dans et hors d'un fluide dans un tube (42, 43, 44; 55, 43, 44; 93) comportant un manchon (3) qui possède une première section d'extrémité (4), qui peut être insérée d'une manière étanche dans un perçage (41; 58; 105) du tube (42, 43, 44; 55, 43, 44; 93) jusque dans le fluide situé dans le tube (42, 43, 44; 55, 43, 44; 93), et est équipé d'une première butée (6) pour limiter l'introduction, **caractérisé en ce que** dans le manchon (3) une douille (7) est montée de manière à être déplaçable axialement sur le trajet de déplacement de réglage limité, que le manchon (30) possède une seconde section d'extrémité (8) pourvue d'un filetage extérieur (9) et qui coopère avec le taraudage (10) d'un écrou (11), que l'écrou (11) est relié selon une liaison d'entraînement à une première section d'extrémité (12) de la douille (7), qui ressort de façon étanche de la seconde section d'extrémité (8) du manchon (3), qu'une seconde section d'extrémité (13) de la douille (7) fait saillie hors de la première section d'extrémité (4) et du manchon (3) lorsque la douille (7) est située à une extrémité de sa course de réglage, et est située à l'intérieur du manchon (3) lorsque la douille (7) est située à l'autre extrémité de sa course de réglage, que la seconde section d'extrémité (13) de la douille (7) est pourvue d'ouvertures (14) alignées radialement pour un passage largement non gêné du fluide et est fermée au niveau de son extrémité libre, que la seconde section d'extrémité (13) de la douille (7) est fermée de façon étanche contre le manchon (3) entre l'extrémité libre de la seconde section d'extrémité (13) de la douille (7) et les ouvertures (14), lorsque la douille (7) est située à l'autre extrémité de sa course de réglage, et que le transmetteur de valeur de mesure (2) comporte un corps cylindrique (16) pourvu d'une tête de mesure (17) à une extrémité et peut être introduit dans la douille (7) axialement et en étant appliqué de façon étanche contre la douille (7), dans une position d'extrémité par rapport à la douille (7), dans laquelle la tête de mesure (17) est située à la hauteur des ouvertures (14) et peut être dans laquelle le transmetteur de valeur de mesure (2) peut être placé dans une liaison d'entraînement avec la douille (7).

2. Dispositif selon la revendication 1, **caractérisé en ce qu'**à l'intérieur de l'écrou (11) est disposé un boulon (26), qui est relié selon une liaison d'entraînement, par l'une de ses extrémités, à la douille (7) et, par sa section moyenne (27) est monté de manière à être déplaçable dans une rainure axiale (28) d'une seconde butée (29) formée sur la seconde section d'extrémité (8) du manchon (3) et qui possède le filetage extérieur (9) de la seconde section d'extrémité (8) du manchon (3) et que la course de réglage de la douille (7) est limité par la seconde butée (29).

3. Dispositif selon la revendication 2, **caractérisé en ce que** le boulon (26) comporte, sur son autre extrémité, une tête (3), qui est disposée entre les deux butées (6, 25) et dont le diamètre est supérieur à la largeur de l'écrou (28).

4. Dispositif selon l'une des revendications 1 à 3, **caractérisé en ce que** la liaison d'entraînement entre l'écrou (11) et la douille (7) comporte deux bagues (31, 32), qui entourent de façon immobile la douille (7) et entre lesquelles s'engage une partie saillante (33) qui pénètre à l'intérieur et est reliée à l'écrou (11).

5. Dispositif selon l'une des revendications 2 à 4, **caractérisé en ce que** le boulon (26) comporte à l'une de ses extrémités une seconde tête (34), qui s'engage entre la bague (31), située du côté du manchon (3), et la partie saillante (33), agencée sous la forme d'une bride, de l'écrou (11).

6. Dispositif selon la revendication 5, **caractérisé en ce que** la section médiane (27) du boulon (26) est située dans une rainure axiale (35) de la bague (31) située du côté du manchon (3).

7. Dispositif selon l'une des revendications 1 à 6, **caractérisé en ce que** le corps (16) du transmetteur de valeur de mesure (2) est équipé d'une bride (21), qui est retenue, dans la position d'extrémité d'introduction du transmetteur de valeur de mesure (2) dans la douille (7), dans une position appliquée sur l'extrémité libre de la première section d'extrémité (12) de la douille (7), au moyen d'une liaison à vis.

8. Dispositif selon la revendication 7, **caractérisé en ce que** la liaison vissée est réalisée au moyen d'un écrou - raccord (22) qui s'engage sur la bride (21) du corps du transmetteur de valeur de mesure et est vissé sur la première section d'extrémité (12) de la douille (7).

9. Dispositif selon l'une des revendications 1 à 8, **caractérisé en ce que** la première section d'extrémité (4) de la douille (3) est pourvue d'un filetage extérieur (5) et que le perçage (41; 58) est un perçage taraudé, dans lequel peut être vissé le filetage extérieur (5).

10. Dispositif selon l'une des revendications 1 à 5, **caractérisé en ce que** la première butée (6) est un collet à pourtour polygonal.

11. Dispositif selon la revendication 10, **caractérisé en ce qu'**il comporte un élément de tube (42; 55), dans lequel est formé le perçage taraudé (41; 58) et qui est inséré coaxialement entre deux sections (43, 44) du tube et possède une section transversale de passage prédéterminée.

12. Dispositif selon la revendication 11, **caractérisé en ce que** l'élément de tube (55) forme le boîtier d'une soupape à bille, qui est utilisée pour le blocage et la libération du passage du fluide dans le tube et la création d'une cavité fermée (56) dans l'état bloqué, soupape dont la bille creuse (57) délimite à l'état bloqué, conjointement avec l'élément de tube (55), la cavité (56) et est ouvert en direction du perçage taraudé (58) et transversalement par rapport à ce dernier.

13. Dispositif selon la revendication 11, **caractérisé en ce que** l'une de deux plaques (89, 90), qui sont reliées en étant superposées et possèdent chacune une ouverture de passage (91, 92) coaxiale à l'autre, est fixée de manière à s'appliquer de façon étanche sur la périphérique du tube (93) de telle sorte qu'entre les plaques (89, 90) un disque (94) est monté de manière à pouvoir tourner autour d'un axe (95) excentrique par rapport aux ouvertures de passage (91, 92), pour venir dans une position de blocage des ouvertures de passage (91, 92) et est monté de manière étanche contre les plaques, que le disque (94) peut être amené en recouvrement sur les ouvertures de passage (91, 92) et que coaxialement à l'ouverture de passage (92) de l'autre plaque (90), tournée à l'opposé du tube (93), est formée une tubulure (104), qui possède un perçage taraudé (41) et dans lequel la première section d'extrémité (4) du manchon (3) peut être vissée d'une manière étanche avec son filetage extérieur (100).

14. Dispositif selon la revendication 13, **caractérisé en ce que** la plaque (89) qui est appliquée sur le tube (93) comporte, sur son côté tourné vers le tube (93), un évidement partiellement cylindrique (106) ayant un rayon de courbure adapté au rayon de courbure de la circonférence du tube, et que deux bords de cette plaque (89) sont reliés par une bande métallique pouvant être tendue (107), qui s'applique contre le côté du tube (93) tourné à l'opposé des plaques (89, 90).
